Europäisches Patentamt

European Patent Office

Office européen des brevets

(11) Numéro de publication : **0 517 574 A1**

# (12) DEMANDE DE BREVET EUROPEEN

(21) Numéro de dépôt : **92401494.7**

(22) Date de dépôt : **02.06.92**

(51) Int. Cl.$^5$ : **G21K 1/06**

(30) Priorité : **04.06.91 FR 9106713**

(43) Date de publication de la demande :
**09.12.92 Bulletin 92/50**

(84) Etats contractants désignés :
**AT BE CH DE DK ES GB GR IT LI LU MC NL PT SE**

(71) Demandeur : **COMPAGNIE INDUSTRIELLE DES LASERS CILAS**
**Route de Nozay, BP 27**
**F-91460 Marcoussis (FR)**

(72) Inventeur : **Samuel, François Jean**
**27 rue Aristide Briand**
**F-78380 Bougival (FR)**
Inventeur : **Vidal, Bernard**
**L'Enclos 17, Chemin Départemental 18**
**F-13510 Eguille (FR)**

(74) Mandataire : **Bonnetat, Christian**
**CABINET BONNETAT 23, Rue de St.Pétersbourg**
**F-75008 Paris (FR)**

(54) **Matériau réflecteur pour optique neutronique et dispositif en faisant application.**

(57) — Matériau réflecteur pour optique neutronique comportant au moins une couche mince d'un composé métallique de nickel et de carbone.
— Application aux guides pour neutrons.

FIG. 2

EP 0 517 574 A1

La présente invention concerne un matériau réflecteur, apte à réfléchir des neutrons, et son application à la réalisation de dispositifs d'optique neutronique, et plus particulièrement à celle d'un guide pour neutrons.

Pour des expérimentations de physique atomique, on utilise des neutrons issus, par exemple, d'un réacteur. Ceux-ci traversent des guides qui les dirigent vers la cible utilisée. Ces guides sont constitués d'un conduit, de géométrie très précise et quasi-rectiligne, qui relie la source de neutrons au lieu de l'expérience. Or les neutrons n'ayant pas de charge électrique, il n'est pas possible de les guider par un champ électro-magnétique. De ce fait, leur guidage résulte d'un phénomène de réflexion sur les parois internes du guide. Ceci impose donc une première limitation, relative à la forme du trajet suivi par ce guide. De plus, les neutrons, ayant des trajectoires non guidées, ils touchent périodiquement la paroi du guide. Selon l'angle d'incidence, ils sont réfléchis ou bien ils sont absorbés par cette paroi, ce qui impose une deuxième limitation, relative à l'angle solide à l'intérieur duquel les neutrons pourront être effectivement propagés, ce qui revient à une limitation sur le flux réellement disponible au lieu de l'expérience.

De tels guides à neutrons doivent donc avoir des propriétés optiques et mécaniques qui leur permettent de réfléchir les neutrons les atteignant sous divers angles d'incidence inférieures à un angle limite.

En dessous de cet angle limite, le matériau doit présenter de bonnes propriétés de réflectivité, ce qui interdit de tolérer des défauts de surface, tels que défauts de construction ou défauts de structure du matériau.

Cet angle limite, au delà duquel le guide absorbe les neutrons, est cependant très faible, de l'ordre de $2.10^{-3}$ radian/$\lambda$, où $\lambda$ est la longueur d'onde associée du neutron et détermine donc le pourcentage de neutrons susceptibles de pouvoir se réfléchir. Cet angle limite croît avec le potentiel de diffusion dans le vide des composants du matériau constituant le guide, qui est proportionnel au produit de la densité atomique du matériau, en nombre d'atomes par cm3, par l'amplitude de diffusion cohérente nucléaire, en cm.

Ces limites très basses pour la réflectivité entraînent une réduction notable du nombre de neutrons qui atteignent la cible, le rendement en nombre de neutrons reçus par rapport au nombre de neutrons émis dans l'ensemble du spectre pouvant être de quelques pour cent, dans les guides usuels de neutrons. Une conséquence en est que cette cible doit être à distance relativement courte du réacteur, ce qui peut être une gêne. Une autre conséquence est que, si l'on veut augmenter le nombre de neutrons reçus par seconde par la cible, à distance donnée de cette cible, il faut augmenter la puissance du réacteur, ce qui est soit impossible, soit très coûteux.

La présente invention a pour objet un matériau et son application à un dispositif pour optique neutronique qui diminue ces limitations de proximité de la cible par rapport au réacteur et de courbure admissible du guide de neutrons.

A cet effet, le matériau réflecteur pour optique neutronique selon l'invention est remarquable en ce qu'il comporte au moins une couche mince d'un composé métallique de nickel qui contient du carbone et dont le potentiel de diffusion est de ce fait accru.

Avantageusement, le matériau peut être constitué d'une alternance de couches minces d'un composé métallique à base de nickel et de couches minces de titane, ledit composé métallique de nickel contenant du carbone.

Un tel matériau réflecteur de neutrons a un angle limite de réflexion qui est accru du fait de l'utilisation d'un composé métallique de nickel et de carbone, qui présente une densité atomique accrue par rapport à celle du nickel sans carbone.

De plus, la présence de couches alternées de deux types de matériaux ayant des densités atomiques nettement différentes augmente encore cet angle limite, de par le contraste présenté entre deux couches voisines.

Le fait de disposer plusieurs couches alternées de densités atomiques nettement différentes permet aussi d'obtenir un cumul de l'effet de chaque couche, augmentant encore cet angle limite.

Par ailleurs, la réflectivité est améliorée, du fait de la présence du carbone dans la couche métallique à base de nickel, qui réduit de façon notable la taille des grains de cristallisation du nickel jusqu'à une structure pratiquement amorphe. La qualité de l'empilement des couches est ainsi plus régulière et exempte de défauts qui nuiraient au pouvoir réflecteur.

De même, la présence du carbone dans la couche à base de nickel a pour effet de limiter considérablement l'interdiffusion entre le nickel et le titane, ce qui maintient un contraste de densités atomiques élevé à la limite de deux couches voisines, et contribue à augmenter la réflectivité.

Il est à noter que la présence de seulement deux couches de matériaux différents facilite la réalisation industrielle du guide, et par là-même augmente ses qualités de réflexion.

Le matériau conforme à l'invention, tel que défini ci-dessus est donc particulièrement apte à la réalisation de tout dispositif d'optique neutronique qui, par réflexion, permet de focaliser, monochromatiser ou défléchir un faisceau et notamment à la réalisation de la paroi interne d'un guide d'onde pour optique neutronique.

On dispose ainsi d'un guide pour optique neutronique offrant un meilleur rendement de transmission, ce qui permet de placer les expériences à plus grande distance du réacteur fournissant les neutrons, tout en conservant un flux suffisant de neutrons.

Les figures du dessin annexé feront bien comprendre comment l'invention peut être réalisée. Sur ces figures, des références identiques désignent des éléments identiques ou semblables.

La figure 1 montre le spectre de diffraction X de couches alternées de nickel et de titane.

La figure 2 montre l'alternance de couches de composé métallique de nickel et de carbone et de couches de titane selon l'invention.

La figure 3 représente le spectre de diffraction X desdites couches alternées du composé métallique de nickel contenant du carbone, et de titane, selon l'invention.

La figure 4 montre la réflectivité du composé métallique de nickel et de carbone selon l'invention, comparée à celle du nickel pur.

La figure 5 illustre la réflectivité des couches alternées du composé métallique de nickel et de carbone et de couches de titane.

La recherche d'un accroissement de l'angle limite et de la réflectivité conduit à utiliser un matériau à densité atomique élevée, et qui puisse aussi être réalisé sous forme de couches minces exemptes de défauts, tels qu'irrégularités dans la structure cristalline dues aux conditions de réalisation de ladite couche. On pourrait, par exemple chercher à réaliser un alliage insterstitiel, en implantant des atomes étrangers dans la matrice atomique du nickel, sans modifier la structure de cette matrice. Une telle implantation ne serait possible que si le rayon atomique de l'atome étranger est inférieur à un certain pourcentage de la taille de l'élément matriciel du nickel. On pourrait ainsi utiliser l'hydrogène ou le Deutérium, l'oxygène, l'azote. Du fait que les atomes cités sont à l'état gazeux à la température de dépôt, leur inclusion dans les mailles cristallines du nickel ne pourrait s'effectuer avec une concentration nécessaire, et leur effet s'en trouverait très limité.

Par ailleurs, toujours dans le même but, on pourrait aussi chercher à utiliser des couches alternées de deux matériaux ayant des densités atomiques nettement différentes, tels le nickel et le titane. Cependant, le titane a la propriété d'absorber, par diffusion, tout autre matériau, ce qui présente une gêne considérable dans le cas présent, puisque l'on veut avoir des couches de densités atomiques différentes, et en particulier un bon contraste au niveau de leur limite. Cela nécessiterait alors de prévoir une couche séparatrice entre la couche à base de nickel et celle à base de titane, empêchant une telle diffusion. Cependant, une telle structure est difficile à mettre en oeuvre industriellement, et n'élimine pas les défauts de qualité de la structure cristalline du nickel.

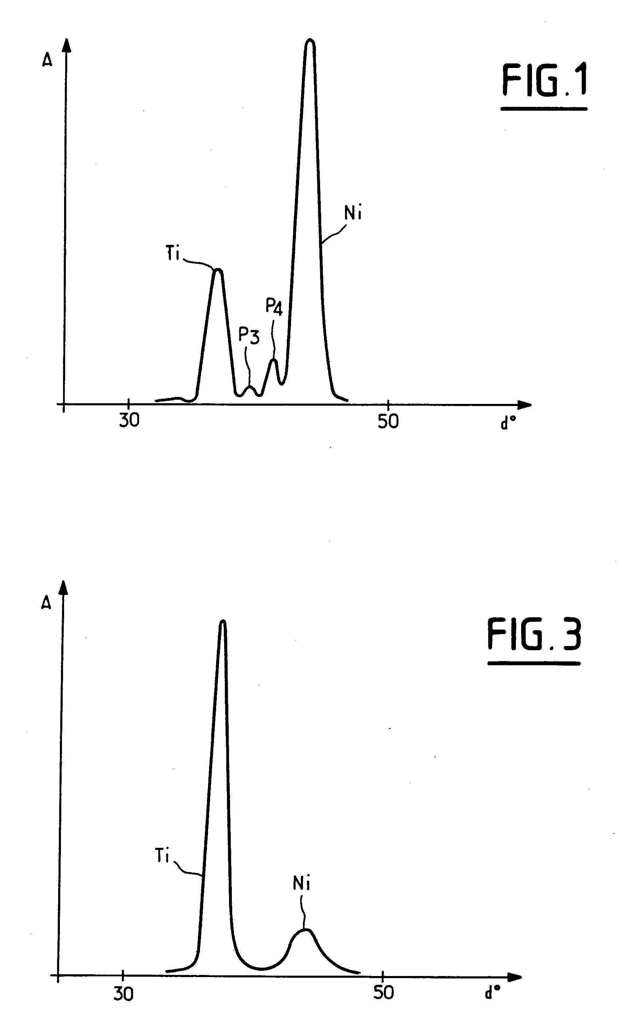

Ainsi, sur la figure 1, est indiqué le spectre de diffraction X de couches alternées de nickel et de titane, avec une période spatiale de 14,3 nm, l'axe des abscisses indiquant l'angle en degrés (d°) entre les faisceaux incident et diffracté, tandis que l'ordonnée représente l'amplitude A de la réponse.

On y note la présence d'un premier pic Ni et d'un deuxième pic Ti, relatifs respectivement au nickel et au titane, significatifs de l'état cristallin de ces matériaux. Ces pics encadrent des troisième P3 et quatrième P4 pics, de faible amplitude, correspondant à deux matériaux de type Ni3 Ti. D'après la largeur des deux premiers pics Ti et Ni, on peut calculer la largeur d'interdiffusion, qui est d'environ 2 nm. Une telle structure n'est donc pas satisfaisante.

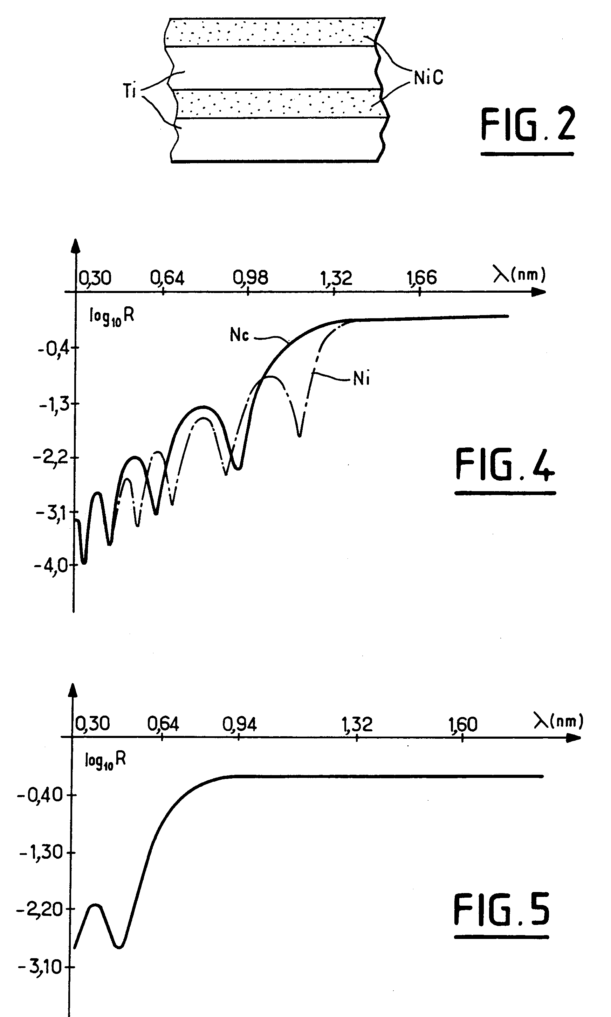

La structure de l'empilage de couches alternées d'un composé métallique à base de nickel contenant du carbone, et de couches de titane, selon l'invention, est représentée sur la figure 2. Les couches dudit composé métallique sont repérées NiC, tandis que les couches de titane sont repérées Ti.

La figure 3 montre, avec les mêmes axes que la figure 1, le spectre de diffraction X de couches alternées dudit composé métallique de nickel et de carbone, d'une part, et de titane, d'autre part, conformément à l'invention, et montré par la figure 2.

On voit que, par rapport à la figure 1, l'amplitude du pic Ni relatif au nickel est nettement moindre, d'un facteur d'environ 20. Ceci montre que la couche à base de nickel a une structure quasi-amorphe. De plus, les troisième et quatrième pics, visibles sur la figure 1, n'existent pas sur la figure 3, ce qui prouve l'absence de zone d'interdiffusion. Par une alternance de telles couches, on obtient ainsi un matériau réflecteur pour optique neutronique, dont les couches présentent un bon contraste, dont la structure quasi-amorphe assure une bonne qualité de surface et qui est exempt de diffusion atomique.

La figure 4 représente le spectre de réflectivité neutronique Nc d'une couche mince de ce composé métallique de nickel et de carbone, avec une échelle logarithmique, en incidence rasante, en fonction de la longueur d'onde neutronique λ. Le spectre équivalent Ni du nickel pur est représenté, à titre de référence. On voit ainsi que le spectre Nc de la réflectivité du composé métallique de nickel et de carbone est, en particulier, aux basses longueurs d'onde, dû à l'augmentation du potentiel de diffusion.

La réflectivité des couches alternées du composé métallique de nickel et de carbone, d'une part, et de titane, d'autre part, conforme à l'invention, est illustrée sur la figure 5.

L'ensemble de ces figures, et les déductions tirées ci-dessus, montrent ainsi que l'utilisation de couches alternées d'un composé métallique de nickel et de carbone, d'une part, et de titane, d'autre part, permet d'obtenir un matériau réflecteur neutronique à angle limite de réflexion qui est accru, et à réflectivité augmentée.

Ce composé métallique peut être réalisé par copulvérisation cathodique ou évaporation simultanée de nickel et de carbone.

Un tel matériau peut, en particulier, servir pour constituer la face interne d'un guide d'onde pour optique neutronique, ayant des qualités accrues de transmission.

Avantageusement, dans les couches de composé métallique de nickel et de carbone, on implante au plus un atome de carbone pour trois atomes de nickel.

**Revendications**

**1** - Matériau réflecteur pour optique neutronique, caractérisé en ce qu'il comporte au moins une couche mince d'un composé métallique de nickel qui contient du carbone et dont le potentiel de diffusion est de.ce fait accru.

**2** - Matériau réflecteur pour optique neutronique selon la revendication 1,
caractérisé en ce qu'il est constitué d'une alternance de couches minces d'un composé métallique à base de nickel et de couches minces de titane, et en ce que ledit composé métallique de nickel contient du carbone.

**3** - Matériau réflecteur pour optique neutronique selon l'une des revendications 1 ou 2,
caractérisé en ce que la ou les couches minces du composé métallique de nickel et de carbone contiennent au maximum un atome de carbone pour trois atomes de nickel.

**4** - Dispositif pour optique neutronique,
caractérisé en ce qu'il comporte au moins une couche du matériau spécifié sous l'une quelconque des revendications 1 à 3.

**5** - Guide pour optique neutronique,
caractérisé en ce qu'il comporte un conduit dont la face interne est constituée dudit matériau réflecteur tel que spécifié sous l'une quelconque des revendications 1 à 3.

FIG.1

FIG.3

FIG. 2

Ti — NiC

$\log_{10} R$

Nc

Ni

FIG. 4

$\log_{10} R$

FIG. 5

EP 0 517 574 A1

Office européen
des brevets

**RAPPORT DE RECHERCHE EUROPEENNE**

Numero de la demande

EP   92 40 1494

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | THIN SOLID FILMS. vol. 164, Octobre 1988, LAUSANNE CH pages 405 - 409; SELLA ET AL.: 'Structure and properties of W/C and Ni/C multilayer fiilms' | 1,3-4 | G21K1/06 |
| Y | * abrégé * * page 407, alinéa 4 * | 2,5 | |
| Y | NUCLEAR INSTRUMENTS & METHODS IN PHYSICS RESEARCH, SECTION  B - vol. B35, no. 2, Décembre 1988, AMSTERDAM pages 181 - 190; ROSSBACH ET AL.: 'The use of focusing supermirror neutron guides to enhance cold neutron fluence rates' * page 181, colonne de gauche, alinéa 1 - page 185, colonne de droite, dernier alinéa * | 2,5 | |
| A | THIN SOLID FILMS. vol. 193/4, no. 1/2, 15 Décembre 1990, LAUSANNE pages 782 - 787; PUIK ET AL.: 'Ion-beam-assisted deposition of Ni/C multilayer X-ray mirrors' * page 782, alinéa 1 -alinéa 2 * | 1 | DOMAINES TECHNIQUES RECHERCHES (Int. Cl.5)<br><br>G21K |
| A | NUCLEAR INSTRUMENTS & METHODS IN PHYSICS RESEARCH, SECTION  A - vol. A299, no. 1/3, 20 Décembre 1990, AMSTERDAM pages 416 - 419; D.F.R. MILDNER: 'The neutron microguide as a probe for materials analysis' | | |
| A | US-A-3 885 153 (SCHOENBORN ET AL.) | | |
| A | DE-A-1 803 806 (INSTITUT MAX VON LAUE) | | |

Le présent rapport a été établi pour toutes les revendications

| Lieu de la recherche | Date d'achèvement de la recherche | Examinateur |
|---|---|---|
| LA HAYE | 31 AOUT 1992 | CAPOSTAGNO E. |